# EUROPÄISCHE PATENTSCHRIFT

(11) **EP 0 545 037 B1**
(45) Veröffentlichungstag und Bekanntmachung des Hinweises auf die Patenterteilung: **30.08.1995**
(21) Anmeldenummer: 92117356.3
(22) Anmeldetag: 15.11.1988
(51) Int. Cl.: F16L 37/12, F16L 37/133

(54) **Vorrichtung zum gegenseitigen Verbinden von zwei Leitungen, insbesondere Kraftstoffleitungen**
Coupling device for two conducts, in particular for fuel conducts
Dispositif d'accouplement de deux conduites, en particulier pour des conduites de carburant

(30) Priorität: 05.12.1987 DE 3741250
(43) Veröffentlichungstag der Anmeldung: 09.06.1993
(62) Teilanmeldung aus: 88119006.0
(73) Patentinhaber: ARMATURENFABRIK HERMANN VOSS GMBH & CO., D-51688 Wipperfürth (DE)
(72) Erfinder: Rösch, Volker, Dr., W-4330 Mülheim (Ruhr) (DE); Goller, Bernd, W-5272 Wipperfürth (DE)
(74) Vertreter: Patentanwälte Dr. Solf & Zapf

(56) Entgegenhaltungen:
- DE-A- 1 936 766
- FR-A- 832 183
- FR-A- 2 230 927
- US-A- 4 398 757

## Beschreibung

Die Erfindung betrifft eine Vorrichtung zum gegenseitigen Verbinden von zwei Rohr- und/oder Schlauchleitungen, insbesondere von zwei Kraftstoffleitungen, bestehend aus einem Verbindungselement mit zwei Anschlußstutzen zum Aufstecken jeweils einer der Leitungen, wobei das Verbindungselement zweiteilig aus einem Aufnahmeteil und einem Einsteckteil ausgebildet ist und diese beiden Teile jeweils einen der beiden Anschlußstutzen aufweisen und das Einsteckteil mit einem Steckabschnitt in eine Aufnahme des Aufnahmeteils dichtend einsteckbar und über Rastmittel lösbar arretiert wird, wobei die Rastmittel des Aufnahmeteils von axial angeordneten und radial federelastischen, mit Rastmitteln des Einsteckteils zusammenwirkenden Rastarmen gebildet sind.

Eine derartige Vorrichtung ist aus der DE-A-1 936 766 bekannt. Diese bekannte Steckkupplung dient zum Verbinden von (Garten-) Wasserschläuchen. Hier trägt das die Rastarme aufweisende Aufnahmeteil eine auch bei Schnellverschlußkupplungen übliche, federbelastete, im wesentlichen hohlzylindrische Schiebehülse, die durch die Kraft einer Druckfeder zwangsweise in eine Stellung gedrängt wird, in der sie mit einer inneren Anlagefläche an den Rastarmen anliegt und diese so arretiert. Zum Lösen der Steckverbindung wird die Schiebehülse gegen die Federkraft nach hinten, d.h. in die dem Einsteckteil abgekehrte Richtung, so weit verschoben, bis die Rastarme freigegeben werden, so daß sie dann zum Herausziehen bzw. Einstecken des Steckteils sich elastisch nach außen bewegen können. Bei derartigen Schiebehülsen sind jedoch nachteiligerweise die Rastmittel stark anfällig gegen von außen eindringenden Schmutz, so daß sie mit zunehmender Gebrauchsdauer in ihrer Funktion negativ beeinträchtigt werden können.

Eine ähnliche Verbindungsvorrichtung ist aus der US-A-4 398 757 bekannt, wobei diese Vorrichtung allerdings speziell für Leitungen vorgesehen ist, durch die Blut und sonstige sterile Lösungen geführt werden sollen. Diese Vorrichtung wird demzufolge insbesondere in solchen Bereichen verwendet, wo keine nennenswerten Verschmutzungen zu befürchten sind. Sollte diese bekannte Vorrichtung jedoch einmal in einer nicht "klinisch reinen" Umgebung verwendet werden, so könnten hiermit ebenfalls schmutzbedingte Störungen auftreten, da auch hier der Bereich der Rastmittel in axialer Richtung völlig offen ist.

Der vorliegenden Erfindung liegt die Aufgabe zugrunde, ausgehend von diesem Stand der Technik eine gattungsgemäße Vorrichtung zu schaffen, die unter praktisch allen Einsatzbedingungen, und zwar insbesondere in Bereichen, wo starke Verschmutzungen zu erwarten sind, wie dies in Automobilen z.B. im Bereich der Kraftstoffleitungen der Fall ist, eine bleibend gute Funktion gewährleistet.

Erfindungsgemäß wird dies durch die Merkmale des Anspruchs 1 erreicht. Vorteilhafte Weiterbildungen der Erfindung sind in den von diesem abhängigen Ansprüchen enthalten.

Die demnach erfindungsgemäß vorgesehene Sicherungskappe umschließt vorteilhafterweise den Bereich der Rastmittel vollständig, da sie zur Abdichtung gegen das Einsteckteil erfindungsgemäß eine umfängliche, radial nach innen ragende und auf dem eingesteckten Einsteckteil dichtend zur Anlage kommende Dichtlippe aufweist, so daß ein Eindringen von Schmutz oder dergleichen Stoffe und Fremdkörper in diesen Bereich wirksam verhindert wird. Zusätzlich zu dieser Dichtfunktion dient die erfindungsgemäße Sicherungskappe vorteilhafterweise auch gleichzeitig zum Arretieren der Rastarme, und zwar etwa so wie bei der Schiebehülse der aus der DE-A-1 936 766 bekannten Steckkupplung, wobei aber die erfindungsgemäße Sicherungskappe - anstatt eine federbedingte Zwangsstellung zu besitzen - vorteilhafterweise in jeder beliebigen Stellung fixiert ist, indem die Sicherungskappe mit dem Aufnahmeteil kraftformschlüssig verbunden ist, so daß sie in beiden axialen Richtungen jeweils erst ab einer bestimmten Betätigungskraft verschiebbar ist. Hierdurch verbleibt sie auf Wunsch in jeder beliebigen Stellung, so vorteilhafterweise z.B. auch in ihrer Lösestellung, so daß dies eine Vormontagestellung ermöglicht, in der nur noch das Einsteckteil eingesteckt und dann die Sicherungskappe in ihre Sicherungsstellung verschoben zu werden braucht.

In Verbindung mit der beschriebenen Vormontagestellung ist es besonders vorteilhaft, wenn das Aufnahmeteil innerhalb des von der Sicherungskappe umschlossenen Hohlraumes axial angeordnete, an der Innenfläche der Sicherungskappe anliegende Führungsarme aufweist. Diese Führungsarme bewirken vorteilhafterweise eine Führung und Zentrierung der Sicherungskappe - bezogen auf die Längsachse der Verbindungsvorrichtung - auch bei noch nicht eingestecktem Einsteckteil. Nach Einstecken des Einsteckteils bewirkt dann vorteilhafterweise auch die umfänglich am Einsteckteil anliegende Dichtlippe eine zusätzliche Führung und Zentrierung der Sicherungskappe.

Die erfindungsgemäß vorgesehene Steckverbindung ermöglicht vorteilhafterweise ein sehr rasches, aber dennoch sicheres Verbinden der beiden Teile des Verbindungselementes, wobei jedes der Teile an einer Leitung vormontiert werden kann, d.h. zum eigentlichen Verbinden der Leitungen kann die Montage der Leitungen an dem Verbindungselement einschließlich der Montage von Schellen o.dgl. Sicherungsmitteln vorteilhafterweise entfallen. Hierdurch eignet sich die erfindungsgemäße Vorrichtung insbesondere für solche Fälle, in denen es auf ein möglichst schnelles Verbinden von Leitungen ankommt, wie es insbesondere bei der Fließbandproduktion im Automobilbau der Fall ist. Die erfindungsgemäß vorgesehene Lösbarkeit der Arretierung zwischen den beiden Teilen des Verbindungselementes gestattet auch ein einfaches Öffnen der Verbindung, was z.B. zum Ausbau eines Tanks oder eines Motors erforderlich sein kann, wobei die Lösbarkeit - und natürlich auch ein anschließendes "Wiederverbinden" - aufgrund der erfindungsgemäßen Abdichtung des Bereichs der Rastmittel vorteilhafterweise auch unter den in Kraftfahrzeugen im allgemeinen herrschenden Schmutzbedingungen praktisch unbegrenzt erhalten bleibt.

Anhand von in den beiliegenden Zeichnungen dargestellten Ausführungsbeispielen wird im folgenden die Erfindung näher erläutert. Dabei zeigen:
- Fig. 1: einen Teil-Axialschnitt einer erfindungsgemäßen Verbindungsvorrichtung,
- Fig. 2: einen Schnitt längs der Linie II-II mit Blick in Pfeilrichtung ohne Darstellung einer Sicherungskappe und
- Fig. 3 bis 5: alternative Ausbildungen der erfindungsgemäßen Verbindungsvorrichtung in Axialschnittdarstellungen.

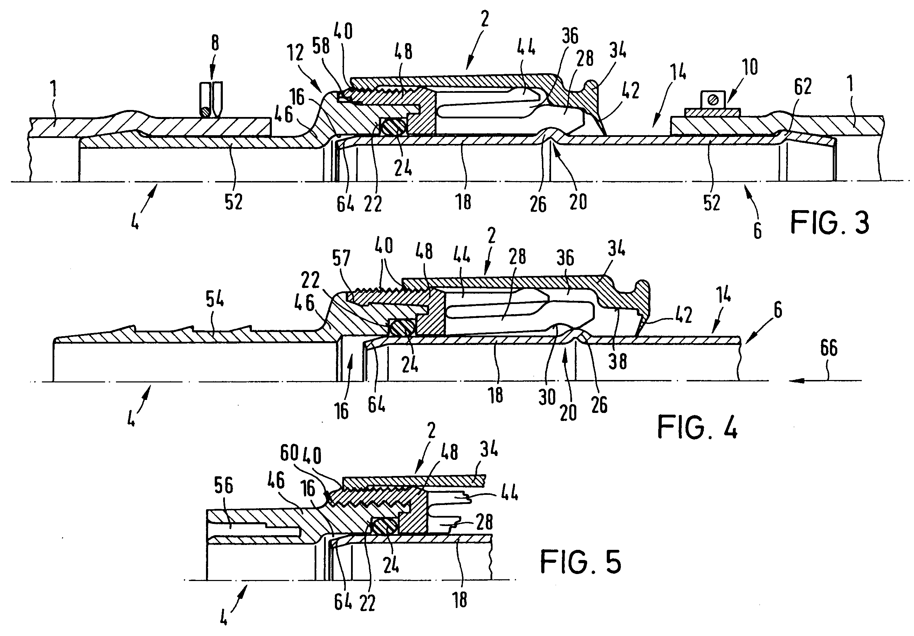

Eine erfindungsgemäße Vorrichtung zum gegenseitigen Verbinden von zwei Rohr- und/oder Schlauchleitungen 1 (siehe Fig. 3) besteht aus einem Verbindungselement 2 mit zwei gegenüberliegenden Anschlußstutzen 4, 6. Zur Montage der Leitungen 1 werden diese z.B. auf jeweils einen der Anschlußstutzen 4, 6 aufgesteckt und mit einer geeigneten Schelle fixiert. In Fig. 3 ist beispielhaft auf der linken Seite eine Drahtfeder-Schelle 8 und auf der rechten Seite eine Schraubschelle 10 angedeutet.

Das Verbindungselement 2 ist zweiteilig ausgebildet und besteht aus einem Aufnahmeteil 12 und einem Einsteckteil 14. Beide Teile 12, 14 weisen jeweils einen der Anschlußstutzen 4, 6 auf. Das Aufnahmeteil 12 weist seinem Anschlußstutzen 4 gegenüberliegend eine Aufnahme 16 und das Einsteckteil 14 seinem Anschlußstutzen 6 gegenüberliegend einen Steckabschnitt 18 auf. Erfindungsgemäß ist der Steckabschnitt 18 dichtend in die Aufnahme 16 einsteckbar und wird in der Aufnahme 16 über Rastmittel 20 lösbar arretiert.

Zur gegenseitigen Abdichtung ist in einer innerhalb der Aufnahme 16 des Aufnahmeteils 12 gebildeten Ringnut 22 ein Dichtring 24 angeordnet, der auf dem eingesteckten Steckabschnitt 18 des Einsteckteils 14 umfänglich dichtend aufliegt.

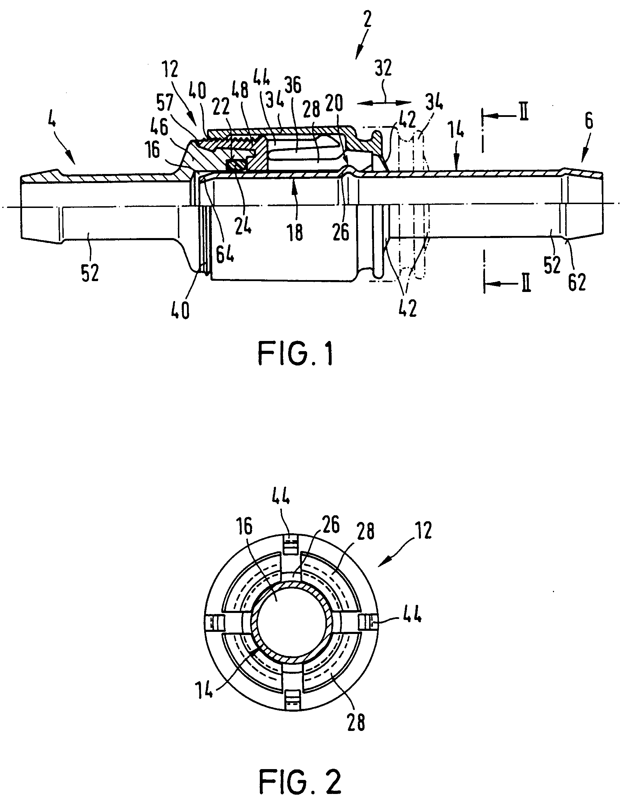

Die Rastmittel 20 sind einerseits durch eine umfängliche Ringwulst 26 am Steckabschnitt 18 des Einsteckteils 14 und andererseits durch axial angeordnete, radial federelastische Rastarme 28 des Aufnahmeteils 12 gebildet. Dabei weisen die Rastarme 28 an ihren freien Enden die Ringwulst 26 des in die Aufnahme 16 eingesteckten Einsteckteils 14 rastend umgreifende Vertiefungen 30 auf (siehe Fig. 4). Wie in Fig. 2 zu erkennen ist, sind vorteilhafterweise vier Rastarme 28 auf den Umfang des Aufnahmeteils 12 verteilt angeordnet. Vorzugsweise sind die Rastarme 28 einstückig an das Aufnahmeteil 12 angeformt und erstrecken sich axial in eine dem Anschlußstutzen 4 entgegengesetzte Richtung.

Zur Erhöhung der Sicherheit der Arretierung trägt das Aufnahmeteil 12 eine zwischen einer Lösestellung und einer Sicherungsstellung in Doppelpfeilrichtung 32 (Fig. 1) axialverschiebliche, im wesentlichen hohlzylinderförmige Sicherungskappe 34. Diese Sicherungskappe 34 umschließt die Rastarme 28 derart umfänglich, daß die Rastarme 28 in der Lösestellung (s. Fig. 4) innerhalb eines von der Sicherungskappe 34 umschlossenen Hohlraumes 36 radialbeweglich sind und in der Sicherungsstellung (s. Fig. 1 und 3) mit ihren freien Enden umfänglich an einer sich axial an den Hohlraum 36 anschließenden Arretierungs-Ringfläche 38 (s. insbesondere Fig. 4) der Sicherungskappe 34 anliegen. Dabei ist es vorteilhaft, wenn die Arretierungs-Ringfläche 38 der Sicherungskappe 34 sowie die freien Enden der Rastarme 28 derart konisch ausgebildet sind, daß die Rastarme 28 in der Sicherungsstellung der Sicherungskappe 34 unter radial nach innen wirkender Vorspannung stehen. Ein Öffnen bzw. ein Trennen der Verbindung ist in der Sicherungsstellung der Sicherungskappe 34 somit vorteilhafterweise ausgeschlossen, so daß auch bei einem eventuellen axialen Zug an den Leitungen 1 die Verbindung sicher aufrechterhalten. wird.

Erfindungsgemäß ist die Sicherungskappe 34 mit dem Aufnahmeteil 12 kraftformschlüssig verbunden. Hierdurch wird sichergestellt, daß ein axiales Verschieben der Sicherungskappe 34 in Doppelpfeilrichtung 32 erst ab einer bestimmten Betätigungskraft erfolgen kann, wodurch ein unbeabsichtigtes Verschieben in die Lösestellung und damit ein unbeabsichtigtes Trennen der Verbindung wirksam verhindert wird. Wie dargestellt, weisen das Aufnahmeteil 12 auf seinem Außenumfang sowie die Sicherungskappe 34 zumindest auf einem Teil ihres Innenumfanges umfängliche Rillungen 40 auf, die kraftformschlüssig ineinandergreifen.

Es ist weiterhin vorteilhaft, wenn die Sicherungskappe 34 im Anschluß an die Arretierungs-Ringfläche 38 eine umfängliche, radial nach innen ragende Dichtlippe 42 aufweist, die auf dem eingesteckten Einsteckteil 14 dichtend aufliegt. Die Dichtlippe 42 verhindert wirksam ein Eindringen von Verschmutzungen in den Hohlraum 36.

Zusätzlich zu der Dichtlippe 42, die bereits eine Führung und Zentrierung der Sicherungskappe 34 bewirkt, kann das Aufnahmeteil 12 axial angeordnete, innerhalb des von der Sicherungskappe 34 umschlossenen Hohlraumes 36 an deren Innenfläche anliegende Führungsarme 44 aufweisen. Gemäß Fig. 2 sind erfindungsgemäß vier umfänglich verteilt angeordnete Führungsarme 44 vorgesehen, die im wesentlichen parallel zu den Rastarmen 28 angeordnet sowie ebenfalls einstückig an das Aufnahmeteil 12 angeformt sind.

In einer vorteilhaften Weiterbildung der Erfindung besteht das Aufnahmeteil 12 aus zwei miteinander verbundenen Bauteilen 46, 48, wobei das Bauteil 46 den Anschlußstutzen 4 und das andere Bauteil 48 die Rastmittel 20 aufweist und die Sicherungskappe 34 trägt. Dabei ist von besonderem Vorteil, daß das die Rastmittel 20 und die Sicherungskappe 34 aufweisende Bauteil 48 stets gleich ausgebildet sein kann, während das Bauteil 46 unterschiedlich ausgebildete Anschlußstutzen 4 aufweisen kann. So kann gemäß Fig. 1 und 3 der Anschlußstutzen 4 als Schlauchtülle 52 für Schlauchleitungen, gemäß Fig. 4 als Einschlagdorn 54 für Rohrleitungen aus Kunststoff bzw. Metall und gemäß Fig. 5 als ringförmige Aufnahme 56 zum Einschweißen von Rohrleitungen ausgebildet sein. Bei der letztgenannten Ausbildung gemäß Fig. 5 erfolgt die Verbindung vorteilhafterweise durch Reibungsschweißen, wobei ein Rohr in die Aufnahme 56 eingeführt und eines der beiden Teile, d.h. entweder das Rohr oder der Anschlußstutzen 4, in Rotation versetzt wird, so daß aufgrund der entstehenden Reibung eine für die Schweißverbindung erforderliche Wärmeentwicklung verursacht wird.

Bei der zweiteiligen Ausbildung des Aufnahmeteils 12 kann vorteilhafterweise zwischen den beiden Bauteilen 46, 48 die Ringnut 22 für den Dichtring 24 gebildet sein.

In den Ausführungsformen gemäß Fig. 1 und 4 sind die beiden Bauteile 46, 48 des Aufnahmeteils 12 über eine Rastverbindung 57 miteinander verbunden. Hierzu weist das Bauteil 46 eine umlaufende Ringnut auf, in die ein umlaufender Ringsteg des anderen Bauteils 48 einrastet. Alternativ zu dieser Ausbildung ist in der Ausführungsform gemäß Fig. 3 zwischen den Bauteilen 46 und 48 eine Schweißverbindung 58 vorgesehen. Schließlich kann auch - wie in Fig. 5 dargestellt - zwischen den Teilen 46 und 48 eine Gewindeverbindung 60 bestehen, die zusätzlich verklebt sein kann.

Das Aufnahmeteil 12 besteht vorzugsweise aus Kunststoff. Auch die Sicherungskappe 34 besteht aus Kunststoff, der jedoch aufgrund des vorgesehenen Kraftformschlusses elastisch dehnbar sein muß. Das Einsteckteil 14 besteht erfindungsgemäß aus einem einstückigen Rohrstück aus Kunststoff oder Metall, wobei eine Ringwulst 62 des Anschlußstutzens 6, die umfängliche Ringwulst 26 des Steckabschnittes 18 sowie eine vorzugsweise an dem dem Anschlußstutzen 6 gegenüberliegenden Ende angeordnete Anfasung 64 spanlos durch Stauchung gebildet sind.

Mit der erfindungsgemäßen Verbindungsvorrichtung ist das Verbinden von zwei Leitungen 1 sehr schnell und einfach durchführbar. Die Leitungen 1 sind bereits an den Anschlußstutzen 4, 6 vormontiert. Die Sicherungskappe 34 befindet sich in der in Fig. 4 dargestellten Lösestellung (Vormontagestellung). Das Einsteckteil 14 wird mit seinem Steckabschnitt 18 axial in Pfeilrichtung 66 gemäß Fig. 4 zunächst durch die Dichtlippe 42 hindurch und in die Aufnahme 16 eingesteckt, bis die Rastarme 28 die Ringwulst 26 des Einsteckteiles 14 rastend umgreifen. In dieser Stellung wird die Verbindung bereits durch den Dichtring 24 abgedichtet. Schließlich braucht nur noch die Sicherungskappe 34 axial in die Sicherungsstellung verschoben zu werden, wodurch der in Fig. 1 und 3 dargestellte Zustand erreicht und die Verbindung gegen ungewolltes Lösen gesichert ist.

## Patentansprüche

1. Vorrichtung zum gegenseitigen Verbinden von zwei Rohr- und/oder Schlauchleitungen (1), insbesondere von zwei Kraftstoffleitungen, bestehend aus einem Verbindungselement (2) mit zwei Anschlußstutzen (4, 6) zum Aufstecken jeweils einer der Leitungen (1), wobei das Verbindungselement (2) zweiteilig aus einem Aufnahmeteil (12) und einem Einsteckteil (14) ausgebildet ist und diese beiden Teile (12, 14) jeweils einen der beiden Anschlußstutzen (4, 6) aufweisen und das Einsteckteil (14) mit einem Steckabschnitt (18) in eine Aufnahme (16) des Aufnahmeteils (12) dichtend einsteckbar und über Rastmittel (20) lösbar arretiert wird, wobei die Rastmittel (20) des Aufnahmeteils (12) von axial angeordneten und radial federelastischen, mit Rastmitteln (20) des Einsteckteils (14) zusammenwirkenden Rastarmen (28) gebildet sind, wobei das Aufnahmeteil (12) eine zwischen einer Lösestellung und einer Sicherungsstellung axialverschiebliche, im wesentlichen hohlzylinderförmige Sicherungskappe (34) trägt, die den Bereich der Rastmittel (20) derart umschließt, daß einerseits die Rastarme (28) in der Lösestellung innerhalb eines von der Sicherungskappe (34) umschlossenen Hohlraumes (36) radialbeweglich sind und in der Sicherungsstellung mit ihren freien Enden umfänglich an einer sich axial an den Hohlraum (36) anschließenden, im Durchmesser reduzierten Arretierungs-Ringfläche (38) der Sicherungskappe (34) anliegen, und daß andererseits der Bereich der Rastmittel (20) gegen ein Eindringen von Verschmutzungen von außen abgedichtet ist, indem die Sicherungskappe (34) im Anschluß an die Arretierungs-Ringfläche (38) eine umfängliche, radial nach innen ragende Dichtlippe (42) aufweist, die auf dem eingesteckten Einsteckteil (14) dichtend aufliegt.

2. Vorrichtung nach Anspruch 1,
**dadurch gekennzeichnet,** daß die Arretierungs-Ringfläche (38) der Sicherungskappe (34) und die freien Enden der Rastarme (28) derart konisch ausgebildet sind, daß die Rastarme (28) in der Sicherungsstellung der Sicherungskappe (34) unter radial nach innen wirkender Vorspannung stehen.

3. Vorrichtung nach einem der Ansprüche 1 oder 2,
**dadurch gekennzeichnet,** daß das Aufnahmeteil (12) auf seinem Außenumfang sowie die Sicherungskappe (34) zumindest auf einem Teil ihres Innenumfanges umfängliche Rillungen (40) aufweisen, die kraftformschlüssig ineinandergreifen.

4. Vorrichtung nach einem der Ansprüche 1 bis 3,
**dadurch gekennzeichnet,** daß das Aufnahmeteil (12) axial angeordnete, innerhalb des von der Sicherungskappe (34) umschlossenen Hohlraumes (36) an deren Innenfläche anliegende Führungsarme (44) aufweist.

5. Vorrichtung nach einem der Ansprüche 1 bis 4,
**dadurch gekennzeichnet,** daß die Rastmittel (20) des Einsteckteils (14) aus einem am Steckabschnitt (18) gebildeten, umfänglichen Ringwulst (26) bestehen, wobei die Rastarme (28) des Aufnahmeteils (12) an ihren freien Enden den Ringwulst (26) des in die Aufnahme (16) eingesteckten Einsteckteils (14) rastend umgreifende Vertiefungen (30) aufweisen.

6. Vorrichtung nach einem der Ansprüche 1 bis 5,
**dadurch gekennzeichnet,** daß das Aufnahmeteil (12) aus zwei miteinander verbundenen Bauteilen (46, 48) besteht, wobei das erste Bauteil (46) den Anschlußstutzen (4) besitzt und das zweite Bauteil (48) die Rastmittel (20) aufweist sowie die Sicherungskappe (34) trägt.

7. Vorrichtung nach einem der Ansprüche 1 bis 6,
**dadurch gekennzeichnet,** daß in einer innerhalb der Aufnahme (16) des Aufnahmeteiles (12) gebildeten Ringnut (22) ein Dichtring (24) angeordnet ist, der auf dem eingesteckten Steckabschnitt (18) des Einsteckteiles (14) umfänglich dichtend aufliegt, wobei die Ringnut (22) vorzugsweise zwischen den beiden Bauteilen (46, 48) des Aufnahmeteils (12) gebildet ist.

8. Vorrichtung nach Anspruch 6 oder 7,
**dadurch gekennzeichnet,** daß die beiden Bauteile (46, 48) des Aufnahmeteiles (12) miteinander verrastet, verschraubt, verklebt und/oder verschweißt sind.

9. Vorrichtung nach einem der Ansprüche 1 bis 8,
**dadurch gekennzeichnet,** daß die Anschlußstutzen (4, 6) als Schlauchtülle (52) für Schlauchleitungen, als Einschlagdorn (54) für Rohrleitungen und/oder als ringförmige Aufnahme (56) zum Einschweißen von Rohrleitungen ausgebildet sind.

10. Vorrichtung nach einem der Ansprüche 1 bis 9,
**dadurch gekennzeichnet,** daß das Einsteckteil (14) aus einem einstückigen Rohrstück aus Kunststoff oder Metall besteht, wobei ein Ringwulst (62) des Anschlußstutzens (6), der umfängliche Ringwulst (26) des Steckabschnittes (18) sowie eine vorzugsweise am dem Anschlußstutzen (6) gegenüberliegenden Ende angeordnete Anfasung (64) spanlos durch Stauchung gebildet sind.

## Claims

1. Means for mutually connecting two pipelines and/or hose lines (1), in particular two fuel lines, comprising a connection element (2) having two connecting fittings (4, 6) on which to fit in each case one of the lines (1), the connection element (2) being constructed in two parts, a receiving part (12) and an insertion part (14), and these two parts (12, 14) having a respective one of the two connecting fittings (4, 6), and the insertion part (14) being insertable in sealing manner in a receiver (16) of the receiving part (12) by means of a plug-in section (18) and being detachably locked therein by way of latching means (20), the latching means (20) of the receiving part (12) being formed from axially arranged, radially resilient latching arms (28) which cooperate with latching means (20) of the insertion part (14), the receiving part (12) bearing a substantially hollow-cylindrical securing cap (34) which is axially displaceable between a detached position and a securing position and encloses the region of the latching means (20) such that on the one hand the latching arms (28) are radially movable in the detached position within a hollow space (36) enclosed by the securing cap (34), and in the securing position bear peripherally by means of their free ends against an annular locking surface (38), which axially adjoins the hollow space (36) and is reduced in diameter, of the securing cap (34), and on the other hand the region of the latching means (20) is sealed to prevent dirt from penetrating from the outside by the securing cap (34) having, adjoining the annular locking surface (38), a peripheral, radially inwardly projecting sealing lip (42) which bears in sealing manner against the inserted insertion part (14).

2. Means according to Claim 1, characterized in that the annular locking surface (38) of the securing cap (34) and the free ends of the latching arms (28) are constructed to be conical such that the latching arms (28) are under radially inwardly acting pre-tension in the securing position of the securing cap (34).

3. Means according to one of Claims 1 or 2, characterized in that the receiving part (12) has on its outer periphery, and the securing cap (34) has at least on part of its inner periphery, peripheral grooves (40) which engage with force fit in one another.

4. Means according to one of Claims 1 to 3, characterized in that the receiving part (12) has axially arranged guide arms (44) which within the hollow space (36) enclosed by the securing cap (34) bear against the inner surface of the securing cap (34).

5. Means according to one of Claims 1 to 4, characterized in that the latching means (20) of the insertion part (14) comprise a peripheral annular bead (26) formed on the plug-in section (18), the latching arms (28) of the receiving part (12) having at their free ends depressions (30) which surround in latching manner the annular bead (26) of the insertion part (14) inserted in the receiver (16).

6. Means according to one of Claims 1 to 5, characterized in that the receiving part (12) comprises two mutually connected structural parts (46, 48), the first structural part (46) having the connecting fitting (4) and the second structural part (48) having the latching means (20) and the securing cap (34).

7. Means according to one of Claims 1 to 6, characterized in that there is arranged in an annular groove (22) formed within the receiver (16) of the receiving part (12) a sealing ring (24) which bears in peripherally sealing manner against the inserted plug-in section (18) of the insertion part (14), the annular groove (22) preferably being formed between the two structural parts (46, 48) of the receiving part (12).

8. Means according to Claim 6 or 7, characterized in that the two structural parts (46, 48) of the receiving part (12) are latched, screwed, glued and/or welded to one another.

9. Means according to one of Claims 1 to 8, characterized in that the connecting fittings (4, 6) are constructed as the hose nozzle (52) for hose lines, as a drive-in mandrel (54) for pipelines and/or as an annular receiver (56) in which to weld pipelines.

10. Means according to one of Claims 1 to 9, characterized in that the insertion part (14) comprises a one-piece pipe section of plastics or metal, an annular bead (62) of the connecting fitting (6), the peripheral annular bead (26) of the plug-in section (18), and a chamfer (64) which is preferably arranged on the end opposite the connecting fitting (6), being formed in non-cutting manner by upsetting.

## Revendications

1. Dispositif pour relier entre elles deux conduites tubulaires et/ou flexibles (1), en particulier deux conduites de carburant, ledit dispositif comportant un élément de liaison (2) muni de deux manchons de connexion (4, 6) pour y emboîter respectivement l'une des conduites (1), l'élément de liaison (2) étant réalisé en deux parties, à savoir un élément de réception (12) et un élément d'enfichage (14), ces deux parties (12, 14) présentant respectivement l'un des deux manchons de connexion (4, 6), une section d'enfichage (18) de l'élément d'enfichage (14) pouvant être enfichée de manière étanche dans une partie de réception (16) de l'élément de réception (12) et y être verrouillée de manière amovible par des moyens d'arrêt (20), les moyens d'arrêt (20) de l'élément de réception (12) étant formés par des bras d'arrêt (28) disposés axialement, radialement élastiques et coopérant avec des moyens d'arrêt (20) de l'élément d'enfichage (14), l'élément de réception (12) portant un capot de sécurité (34) ayant sensiblement la forme d'un cylindre creux et axialement déplaçable entre une position desserrée et une position de sécurité, ce capot entourant la région des moyens d'arrêt (20) de manière à ce que d'une part, dans la position desserrée, les bras d'arrêt (28) soient radialement mobiles à l'intérieur d'un espace creux (36) entouré par le capot de sécurité (34) et que, dans la position de sécurité, leurs extrémités libres soient appliquées sur la circonférence d'une surface annulaire d'arrêt (38) de diamètre réduit du capot de sécurité (34) faisant axialement suite à l'espace creux (36) et que, d'autre part, la région des moyens d'arrêt (20) soit étanchée pour éviter la pénétration de souillures de l'extérieur, le capot de sécurité (34) présentant à cet effet dans le prolongement de la surface annulaire d'arrêt (38), une lèvre d'étanchéité périphérique (42) faisant radialement saillie vers l'intérieur, cette lèvre étant appliquée de manière étanche sur l'élément d'enfichage (14) introduit.

2. Dispositif selon la revendication 1,
caractérisé en ce que la surface annulaire d'arrêt (38) du capot de sécurité (34) et les extrémités libres des bras d'arrêt (28) ont une forme conique telle que, lorsque le capot de sécurité (34) est dans la position de sécurité, les bras d'arrêt (28) sont sous une précontrainte s'exerçant vers l'intérieur.

3. Dispositif selon l'une des revendications 1 ou 2,
caractérisé en ce que l'élément de réception (12) présente sur sa périphérie extérieure et que le capot de sécurité (34) présente au moins sur une partie de sa périphérie intérieure, des rainures circonférentielles (40) qui coopèrent par engagement mutuel sous l'effet d'une force.

4. Dispositif selon l'une des revendications 1 à 3,
caractérisé en ce que l'élément de réception (12) présente des bras de guidage (44) disposés axialement, appliqués à l'intérieur de l'espace creux (36) entouré par le capot de sécurité (34) sur la face intérieure de ce dernier.

5. Dispositif selon l'une des revendications 1 à 4,
caractérisé en ce que les moyens d'arrêt (20) de l'élément d'enfichage (14) consistent en un bourrelet annulaire (26) formé sur la section d'enfichage (18), les bras d'arrêt (28) de l'élément de réception (12) présentant à leurs extrémités libres des évidements (30) qui entourent et bloquent le bourrelet annulaire (26) de l'élément d'enfichage (14) introduit dans le moyen de réception (16).

6. Dispositif selon l'une des revendications 1 à 5,
caractérisé par le fait que l'élément de réception (12) comporte deux parties (46, 48) reliées entre elles, la première partie (46) présentant le manchon de connexion (4) et la deuxième partie (48) présentant les moyens d'arrêt (20) ainsi que le capot de sécurité (34).

7. Dispositif selon l'une des revendications 1 à 6,
caractérisé par le fait que, dans une rainure annulaire (22) formée dans le moyen de réception ((16) de l'élément (12), est agencé une bague d'étanchéité (24) qui est appliquée de manière étanche sur la circonférence de la section d'enfichage (18) de l'élément d'enfichage (14), la rainure annulaire (22) étant de préférence formée entre les deux parties (46, 48) de l'élément de réception (12).

8. Dispositif selon la revendication 6 ou 7,
caractérisé en ce que les deux parties (46, 48) de l'élément de réception (12) sont reliées entre elles par verrouillage, vissage, collage et/ou soudage.

9. Dispositif selon l'une des revendications 1 à 8,
caractérisé en ce que les manchons de connexion (4, 6) ont la forme d'un embout à olive (52) pour tuyaux flexibles, d'un embout cranté à enfoncer (54) pour conduites tubulaires et/ou d'un moyen de réception annulaire (56) pour fixer à l'intérieur des conduites tubulaires par soudage.

10. Dispositif selon l'une des revendications 1 à 9,
caractérisé en ce que l'élément d'enfichage (14) comprend une section tubulaire d'une seule pièce en une matière synthétique ou en métal, le bourrelet annulaire (62) du manchon de connexion (6), le bourrelet annulaire périphérique (26) de la section d'enfichage (18), ainsi qu'une collerette (64) disposée de préférence à l'extrémité opposée au manchon de connexion (6), étant constitués par déformation sous pression.
